# EUROPEAN PATENT APPLICATION

(11) **EP 2 625 956 A2**
(43) Date of publication of application: **14.08.2013**
(21) Application number: 11830248.8
(22) Date of filing: 27.09.2011
(51) Int. Cl.: A01N 35/06, A01N 41/04

(54) **COMPOSITIONS FOR CONTROLLING THE PSYLLIDS TRIOZA ERYTREAE AND DIAPHORINA CITRI, VECTORS OF BACTERIA OF THE GENUS CANDIDATUS LIBERIBACTER, WHICH CAUSE THE MOST SERIOUS KNOWN DISEASE OF CITRUS, NAMELY HUANGLONGBING (HLB)**

(30) Priority: 06.10.2010 ES 201031482
(71) Applicant: Consejo Superior De Investigaciones Científicas (CSIC), 28006 Madrid (ES)
(72) Inventor: BORGES RODRÍGUEZ,Andrés Antonio, E-38205 La Laguna (Tenerife) (ES); BORGES PÉREZ, Andrés Antonio, E-38205 La Laguna (Tenerife) (ES)
(74) Representative: Ungria López, Javier
(86) International application number: PCT/ES2011/070673
(87) International publication number: WO 2012/045901

(57) **Abstract**

The present invention relates to the use of compositions that, when applied to citrus, are capable of controlling the psyllids *Trioza erytreae* and *Diaphorina citri,* vectors of bacteria of the genus *Candidatus* liberibacter, which cause the disease known as Huanglongbing (HLB), deemed to be the most destructive disease currently to affect citrus crops worldwide. These compositions may contain, without distinction, or jointly, as active components, vitamin K3, soluble derivatives thereof (preferably menadione sodium bisulphite [MSB]) or sparingly soluble derivatives thereof (preferably menadione nicotinamide bisulphite [MNB]), with respective concentrations of between 0.0001 and 200 ppm, 0.001 and 10 000 ppm, preferably vitamin K3 between 0.001 and 100 ppm, MSB between 0.01 and 5000 ppm, and MNB between 0.01 and 5000 ppm. Said compositions are applied preferably by spraying to the aerial part of the plant or via the irrigation system, and may be mixed with a variety of additives, such as organic and inorganic fertilizers, insecticides, nematocides, fungicides, bactericides, acaricides or herbicides.

## Description

### Field of the art

The present invention relates to the general subject of biostimulation of the natural defence mechanisms of the plants. In particular, this invention relates to the use of compositions that when applied to citrus are capable of controlling the psyllids *Trioza erytreae* and *Diaphorina citri,* vectors of bacteria of the genus *Candidatus* liberibacter which cause the disease known as Huanglongbing (HLB), deemed to be the most destructive disease currently to affect citrus crops worldwide.

### Introduction

Like any living organism the plants are subjected to numerous environmental, both abiotic and biotic, stresses. Drought and extreme temperatures are included among the abiotic stresses. Among the biotic stresses are included pests as insects, arachnids and nematodes, and pathogens such as bacteria, viruses and fungi.

The decline of the crop yields as a result of the attacks of pathogens and pests is of great importance. The economic losses caused each year in the crops are estimated at billions of dollars worldwide. The control of the effects of such type of stress on the crops using the minimum quantity of pesticides to prevent their harmful side effects on the environment, animals and people as much as possible, is one of the great challenges of the man of our time in the agriculture.

The Huanglongbing disease (HLB), also known as "greening" of the citrus, is a destructive disease that represents a serious threat to the global industry of the citrus, and that is gradually invading these crops and spreading to new areas. HLB was reported for the first time since 1919 in the south of China and is now known to be present in about 40 different countries of Asia, Africa, Oceania and North and South America. The causative agents are bacteria of the genus *Candidatus* Liberibacter and are restricted to phloem. They are transmitted from one tree to another by the psyllids: *Diaphorina citri* in Asia and America, and *Trioza erytrae* in Africa. Almost all the commercial species and cultivars of citrus are sensitive, regardless of the patterns.

HLB is caused by bacteria of the genus *Candidatus* Liberibacter. Currently three species are known: *Candidatus* Liberibacter asiaticus, that appears in the Asian countries and, to a lesser extent in Brazil and the U.S.A. (Florida), *Candidatus* Liberibacter africanus present in the African countries, and *Candidatus* Liberibacter americanus present in Brazil. It is thought that each Liberibacter species has evolved in the continent which then gives its name. The HLB symptoms are practically the same whenever the disease occurs. The infected trees show leaves mottled with patches which results in the development of yellow shoots, the initial symptom and very characteristic of the disease. The trees suffer from stunted growth, deformed fruits (asymmetric) and lose the characteristic green colour (greening), starting with the colouring at the stalk end (colour inversion). HLB can be transmitted by grafting from citrus to citrus. The psyllids *Trioza erytreae* and *Diaphorina citri* are natural vectors. There are two different types of HLB known: the heat-sensitive African form transmitted by *Trioza erytreae,* which develops at temperatures of 22-25°C, and the heat-resistant Asian form, *Diaphorina citri,* that is transmitted above 30°C.

Another destructive disease of the citrus is the one known as "tristeza" (sadness) caused by the "citrus tristeza virus" (CTV), which induces a rapid decay and death of the citrus grafted on sour orange root stock (*Citrus aurantium* L.). The control of the "tristeza" disease is achieved by the replacement of the sour orange root stock by tolerant root stocks. Important citrus regions, where the CTV is endemic, have learned to live with it. For HLB, however, no control is known, except preventing the trees from getting infected. Therefore, HLB is probably the most serious disease of the citrus, much more serious than "tristeza", and represents a dangerous threat to the regions still free of the disease, such as the Mediterranean basin and Western Asia.

### State of the art

Control of the Psyllid vectors. The main features of the psyllids which should be taken into account in the formulation of control strategies have been reviewed [Bové J.M. "Huanglongbing: A destructive, newly emerging century-old disease of citrus". Journal of Plant Pathology 88 (1), 7-37 (2006)]. The treatments with contact and systemic insecticides reduce the populations of the psyllid, and therefore, HLB. The efficiency of the treatment is easier to estimate with *Trioza erytreae* than with *Diaphorina citri* because the leaf bumps caused by the nymphs of *Trioza erytreae.*

In South Africa, the systemic insecticides (specifically monocrotophos) that have had some success with *Trioza erytreae* have been applied directly to the trunks of the trees. The psyllid *Diaphorina citri* does not exist in South Africa.

In Asia, a wide range of insecticides, particularly organophosphates and pyrethroids, are used in very intense spraying programs to kill the eggs and the nymphs in the new shoots.

The Reunion Island is the only region where the control both of *Trioza erytreae* and *Diaphorina citri* has been effective. The success is due to the fact that initially the two psyllids were established on the island in the absence of parasites. *Tamarixia dryi,* a *Trioza erytreae* parasite, and *Tamarixia radiata*, a *Diaphorina citri* parasite, that were respectively collected in South Africa and India, were released in abandoned citrus plantations that had not received insecticide treatment for some time. In Florida, *Tamarixia radiata* has been introduced from Taiwan and Viet Nam, and it is already established in Florida.

From what has been previously commented on the state of the art in the control of the psyllid vectors of the liberibacter bacteria which cause the HLB of the citrus, one reaches the conclusion that basically the control of HLB calls for the use of insecticides combined with the biological fight for the *Tamarixia radiata* and the *Tamarixia dryi.* Unfortunately, in Florida, neither the use of insecticides nor predators have prevented the establishment of HLB.

The danger for the soil, environment, plants, animals and people, that the excessive use of pesticides involves, has led the researchers to consider other strategies of protection of the crops. One of the possible strategies is the use of compositions that activate the natural defence mechanisms of the plants against the attacks of pathogens and pests, without implying the use of such compositions adverse effects on the soil, the environment, the plants themselves, animals or people. In this sense, we have been researching for 25 years, about the effect that the plant growth regulators could cause in the reinforcement of the natural defence mechanisms of the plants and, as a consequence, in the induction of resistance to pathogens and pests on the plants treated with said regulators. In these researches we have seen how certain type of plant growth regulators, the water soluble Vitamin K derivatives, was able to stimulate the natural defence mechanisms of the treated plants and as a result to induce resistance to the attacks of pathogens and pests. ["Compositions for inducing resistance to tracheomycosis in plants". Patent: WO 95/03702, published: 09.02.95]; ["Uso de composiciones que contienen menadiona, para bioestimular el metabolismo de plantas a fin de inducir su resistencia a pat6genos y plagas" (use to compositions containing menadione for biostimulation of the plant mechanism in order to induce its resistance to pathogens and pests). Patent: [95ES - 9500522, published: 16.04.99]

The literature on plant growth regulators based on Vitamin K and water soluble derivatives thereof is very reduced, appearing the first reference as Patent, in 1985 ["Plant growth regulator - contg. menadione bisulphite - giving cold resistance to rice, vegetables, flowers and fruit trees". 83JP - 179430, published: 24.04.85.], and followed chronologically by the following Patents:
["Citrus fruit quality improving agent - contains water - soluble Vitamin K deriv. As active component" 85JP - 055993, published: 25.09.86];
["Plant growth regulator promoting increase in harvest yield -- contains water -soluble Vitamin K other than menadione bisulphite adduct". 85JP - 054297, 25.09.86]
["Agent for promoting maturity crops -- contains water - soluble Vitamin-K deriv. and. e.g. menadiol dinicotinate ". 86JP-028878, published: 20.08.87];
["Additive for rice seedlings cultivating mat - contains water sol. Vitamin-K deriv. as active component". 86JP - 030770, published: 20.08.87];
["Fatigue of strawberry root preventing agent - contains water soluble Vitamin-K deriv. as active component". 86JP - 032021, published: 22.08.87];
["Plant growth accelerator compsn. -- based on Vitamin-K, contg. menadione and menadiol cpds. With aromatic amine salts and a carrier". 85ES - 542475, published: 16.06.88];
["Plant growth regulation". 76US - 4764201, published: 16.08.88];
["Seed treatment compsn.- contg. water - sol. Vitamin-K deriv. Of alkali metal, alkaline earth metal, etc.". 89JP - 040255, published: 04.09.90];
["Plant growth regulator for increase yield and quality -- Vitamin-K3 and choline salt as active components". 89JP - 155629, published: 01.02.91];
["Plant growth promotion - with menadione bisulphite adducts of vitamin (s) or amino acid (s)". 90IT - 020777, published: 15.01.92];
["Growth activator contg. Vitamin-K derives. - for agricultural or horticultural crop plant alleviating of chemical injury caused herbicide". 90JP - 153870, published: 16.01.92].

Until the publication (16.04.99) of our Patent: 95ES-9500522, indicated before, there were no references in the literature that related this specific type of plant growth regulators, Vitamin K and water-soluble derivatives thereof, with the induction of resistance to pathogens and pests on the plants treated with said types of regulators. We have continued researching, especially in the cultivation of banana and we observe how a water-soluble Vitamin K3 derivative, menadione sodium bisulphite or **MSB**, stimulated the acceleration of blooming of the treated plants, against the non-treated. The result of these investigations was the publication of the following Patents: ["Uso de composiciones que contienen menadiona, para bioestimular el metabolismo de las plantas a fin de adelantar la floración en los cultivos de plátanos" (Use of compositions containing menadione for biostimulation of the plant metabolism in order to accelerate the blooming in banana crop). 95ES - 9500523, published: 01.10.98]; ["Utilization of compositions which contain menadione for the biostimulation of plant metabolism in order to induce their resistance to pathogens and pests and /or accelerate their blooming". WO 96 / 28026]; ["Uso de composiciones que contienen menadiona y/o alguno/s de sus derivados hidrosolubles para bioestimular los mecanismos naturales de defensa de las plantas, a fin de desarrollar sus propiedades antialimentarias frente a los ataques de patógenos y plagas" (use of compositions containing menadione and/or some water-soluble derivatives thereof, in order to develop its anti-alimentary against the pathogen and pests attacks), Application Number 200601179, filing date May 9, 2006, Application for addition to the Main Patent ES-P9500522].

The present invention does not disclose a new insecticide or a new predator for the psyllid vectors. Surprisingly, the citrus trees treated preventively with effective amounts of menadione and/or some water soluble derivative/s thereof, prevent the establishment of the psyllid vectors of bacteria of the genus *Candidatus* Liberibacter in the treated plantation, the most important condition to prevent the establishment of HLB.

### Description of the invention

The present invention relates to the use of compositions that contain menadione and/or some water soluble derivative (s) thereof that when are applied to the plants biostimulate their natural defence mechanisms, in order to control in the citrus treated with these compositions the attacks of the psyllids *Troza erytreae* and *Diaphorina* citri, vectors of the Liberibacter bacteria which cause the Huanglongbing (HLB) of the citrus.

This invention describes the use of a class of compounds that are systemic, biodegradable, no pesticides, no toxic and safe from the environmental point of view, and which are not dangerous for the plants, the animals and the people. Said compounds are:

Menadione or **Vitamin K3** (2 - methyl -1,4- naphthalene-dione or 2 - methyl -1,4- naphthoquinone), Merck index = 5714, C.A.R.N. = [58-27-5] and water soluble derivatives thereof (preferably the different addition compounds formed with sodium bisulphite (menadione sodium bisulphite or **MSB**, M.I. = 5716, C.A.R.N. = [130-37-0], or with potassium bisulphite, or with ammonium bisulphite, or with magnesium bisulphite), and other Vitamin K3 derivatives of low solubility in water (preferably menadione nicotinamide bisulphite or **MNB**, menadione p-amino benzoic acid bisulphite, menadione histidine bisulphite, menadione adenine bisulphite, menadione nicotinic acid bisulphite and menadione tryptophan bisulphite).

The compositions for biostimulation of the natural defence mechanisms of the plant, contain:

**Vitamin K3** and/or at least one water soluble derivative thereof [preferably menadione sodium bisulphite or **MSB]** and/or at least one derivative of low solubility in water thereof (preferably menadione nicotinamide bisulphite or **MNB**).

The application to the surface of the plant of one of the compositions previously described, containing an effective amount of one or more of the described compounds, originates a protective response in it. The defensive response obtained in this way is systemic in nature and, as a result, the treatment of a part of the plant triggers the biostimulation of the natural defence mechanisms throughout the entire the plant.

The recommended form of application of the different compositions is spraying to the aerial part of the plant, which does not exclude, for example, injection into the stem, direct application to the soil or other growing media of the plant, or indirectly through the irrigation water (or culture solution), or by immersion of the root system or the whole plant (or seeds) in the compositions.

The effectiveness of the active components of the compositions, referred to **Vitamin K3**, **MSB** and **MNB** can be expected at the following concentrations: **Vitamin K3** between 0.0001 and 200 ppm; **MSB** between 0.001 and 10000 pmm; **MNB** between 0.001 and 10000 ppm; preferably **Vitamin K3** between 0.001 and 100 ppm, **MSB** between 0.01 and 5000 ppm, **MNB** between 0.01 and 5000 ppm..

The concentration of the active components of the compositions depends on the type of plant, development stage of the same, as well as on the frequency and form of application of the compositions.

Likewise, said compositions can be mixed with a variety of additives, for example: organic and inorganic fertilizers, insecticides, acaricides, nematocides, fungicides, bactericides, herbicides.

### Example

The experimentation was conducted in a commercial plantation of 2400 citrus trees including orange and small amounts of mandarin and lemon trees. In the year 2002, in the area where the experimentation was carried out, *Trioza erytreae* was established, for the first time in Tenerife (Canary Islands). HLB has not yet been established in the Canary Islands.

Before 2008 the plantation had received light *Trioza erytreae* attacks. In 2008 all the trees of the plantation were pruned, because they had been planted 50 years ago and the production of the same was reduced.

Subsequently to the pruning, at the beginning of the summer of 2008, 100% of the trees were severely affected by *Trioza erytreae,* despite the use of insecticides. At the beginning of the summer of 2009 and in spite of the treatment with insecticides, again 100% of the trees were affected.

In February 2010 we started preventive foliar treatments with **MSB** in aqueous solution, once a month. The plantation was divided into three plots:
**Plot A**. Formed by 2000 trees, it received the classic insecticide treatment and also it started being treated at the leaves, once a month, with 80 ppm of MSB in aqueous solution.
**Plot B**. Formed by 300 trees that were treated at the leaves, once a month, only with 80 ppm of MSB in aqueous solution.
**Plot C**. Formed by 100 trees that were only treated with insecticide in the same way as in the Plot A.

At the end of the summer of 2010, the following results were obtained:
**Plot A**. None of the 2000 trees showed leaves with the typical symptoms of the *Trioza erytreae* attack. The combined treatment of insecticide and MSB in Plot A achieved control of 100% of the *Trioza erytreae* attacks.
**Plot B**. None of the 300 trees showed leaves with the typical symptoms of the *Trioza erytreae* attack. The treatment only with MSB in Plot B achieved control of 100% of the *Trioza erytreae* attacks.
**Plot C**. The 100 showed leaves with the typical symptoms of the *Trioza erytreae* attack. The treatment only with insecticide did not prevent an attack of 100% in Plot C.

## Claims

1. Use of compositions for biostimulation of the natural defence mechanisms of the plants **characterized in that** they contain in aqueous solution, at least one of the following active components
- 0.0001 to 200 ppm of Vitamin K3;
- 0.001 to 10000 ppm of a water soluble Vitamin K3 derivative, preferably a bisulphite;
- 0.01 to 10000 ppm of a Vitamin K3 derivative with low solubility in water preferably a bisulphite,
in order to control the attacks of the psyllids *Trioza erytreae* and *Diaphorina citri* in the citrus trees treated with said compositions.

2. Use of compositions according to claim 1, **characterized in that** they are applied to the aerial part of the plant, preferably by spraying.

3. Use of compositions according to claims 1 and 2, **characterized in that** they are applied to the stem of the plant, preferably by injection.

4. Use of compositions, according to claims 1 to 3, **characterized in that** they are applied directly to the soil or other growing media of the plants, or indirectly through irrigation water (or culture solution), or by immersion of the root system of the plants or seeds in the compositions claimed in 1.

5. Use of compositions according to claims 1 to 4, wherein said compositions are used as such or mixed with additives such as organic or inorganic fertilizers, insecticides, nematocides, fungicides, bactericides, acaricides, herbicides.

6. Use of compositions for biostimulation of the natural defence mechanisms of the plants, in order to control, in the citrus trees treated with these compositions, the attacks of the psyllids *Trioza erytreae* and *Diaphorina citri,* vectors of bacteria of the genus *Candidatus* liberibacter which cause the Huanglongbing (HLB) of the citrus, according to claims 1 to 5, wherein said compositions can be applied to the plants before, after or simultaneously with the pesticides.
